# EUROPÄISCHE PATENTANMELDUNG

(11) **EP 3 906 779 A1**
(43) Veröffentlichungstag der Anmeldung: **10.11.2021**
(21) Anmeldenummer: 20172984.5
(22) Anmeldetag: 05.05.2020
(51) Int. Cl.: A01K 5/02

(54) **FUTTERAUTOMAT**

(71) Anmelder: Bronner Besitz GmbH & Co. KG, 72175 Dornhan (DE)
(72) Erfinder: Bronner, Andreas Christoph, 72296 Schopfloch-Oberiflingen (DE)
(74) Vertreter: Späth, Dieter

(57) **Zusammenfassung**

Zum Kirren schlägt die Erfindung einen Futterautomaten (1) mit einer beispielsweise nur für Wildschweine anhebbaren Klappe (17) über einem Kirrgutauffang (16) und einer Fernbedienung und Fernabfrage mittels einer App vor.

## Beschreibung

Die Erfindung betrifft einen Futterautomat zum Kirren, das heißt zu einem automatischen Füttern von Wild.

Aufgabe der Erfindung ist, einen weitgehend automatischen Futterautomaten vorzuschlagen, der im wesentlichen nur zum Auffüllen von Kirrgut aufgesucht werden muss. "Kirrgut" ist ein insbesondere schüttfähiges, beispielsweise körniges Wildfutter wie Mais.

Der erfindungsgemäße Futterautomat mit den Merkmalen des Anspruchs 1 weist einen Vorratsbehälter für das Kirrgut und eine automatische, programmierbare Dosiereinrichtung, die das Kirrgut dosiert abgibt, auf. Der erfindungsgemäße Futterautomat ermöglicht eine Abgabe einer einstellbaren Kirrgutmenge zu festlegbaren Fütterzeiten.

Vorzugsweise weist die Dosiereinrichtung einen elektrischen Antrieb mit insbesondere einem Elektromotor, einen aufladbaren Stromspeicher und insbesondere auch eine Solarzelle zum Aufladen des Stromspeichers auf. Durch die Solarzelle ist der Futterautomat vollständig oder jedenfalls weitgehend unabhängig von einer anderen Energieversorgung. Der aufladbaren Stromspeicher ist allgemein ein Energiespeicher zum Speichern elektrischer Energie und insbesondere ein Akkumulator.

Eine Ausgestaltung der Erfindung sieht vor, dass die Dosiereinrichtung einen Schneckenförderer aufweist. Mit dem Schneckenförderer lässt sich das Kirrgut dosieren und er ermöglicht eine Förderung des Kirrguts aus dem Vorratsbehälter zu beispielsweise einem Auslass des Futterautomaten.

Eine bevorzugte Ausgestaltung der Erfindung sieht einen Füllstandssensor für den Futterautomaten vor, worunter auch eine Einrichtung zu verstehen ist, mit der feststellbar ist, ob der Vorratsbehälter leer ist oder nur noch eine bestimmte Restmenge enthält.

Eine bevorzugte Ausgestaltung der Erfindung sieht eine anhebbare Klappe oder Schieber vor, die/der eine Futterstelle an einem Auslass des Futterautomaten abdeckt. Die Futterstelle ist eine Stelle oder ein Bereich, auf, an oder in den Kirrgut gelangt, dass mittels der Dosiereinrichtung durch den Auslass des Futterautomaten austritt. Die Futterstelle kann also beispielsweise ein Bereich eines natürlichen Bodens sein, auf den Kirrgut fällt, das durch den Auslass des Futterautomaten austritt. Die Klappe bzw. der Schieber hat insbesondere den Zweck, das dosiert vom Futterautomaten ausgegebene Kirrgut nur bestimmtem Wild zugänglich zu machen und/oder anderes Wild vom Zugang zum Kirrgut auszuschließen. Die Klappe bzw. der Schieber kann beispielsweise so ausgebildet und angeordnet sein, dass Wildschweine sie anheben bzw. ihn verschieben und damit an das vom Futterautomaten ausgegebene Kirrgut gelangen können, wogegen Vögel und Niederwild einschließlich Rehen nicht in der Lage sind, die Klappe anzuheben oder den Schieber zu verschieben und dadurch an das Kirrgut zu gelangen. Möglich sind auch Ausbildungen, die beispielsweise Rehen die Zugänglichkeit zum Kirrgut ermöglichen. Beispielsweise kann die Klappe bzw. der Schieber mit Gewichten belastbar und/oder federbeaufschlagt sein, so dass nur ausreichend starke Tiere sie anheben bzw. ihn verschieben können.

Eine Ausgestaltung der Erfindung sieht vor, dass der Futterautomat einen Kirrgutauffang aufweist, in den aus dem Auslass des Futterautomaten austretendes Kirrgut gelangt und dort für Tiere zugänglich ist, die in der Lage sind, die Klappe anzuheben bzw. den Schieber zu verschieben. Der Kirrgutauffang kann beispielsweise ein Blech, ein Tablett oder eine Schale unter dem Auslass sein.

Eine bevorzugte Ausgestaltung der Erfindung sieht einen Klappen- bzw. Schieberöffnungssensor vor, mit dem feststellbar ist, wie oft und insbesondere auch wann die Klappe angehoben bzw. der Schieber aufgeschoben wird.

Vorzugsweise weist der erfindungsgemäße Futterautomat eine Fernbedienung und/oder einen Fernmelder und/oder eine Fernabfrage auf. Mit der Fernbedienung sind beispielsweise Futtermengen und Fütterzeiten einstellbar. Der Fernmelder meldet insbesondere einen Leerstand des Vorratsbehälters oder eine Unterschreitung einer festen oder einstellbaren Füllmenge. Mit der Fernabfrage ist insbesondere eine Abfrage möglich, wie oft und vorzugsweise auch wann die Klappe angehoben worden ist. Die Fernbedienung, Fernmelder und/oder Fernabfrage ist insbesondere mithilfe einer App, also einer Anwendungssoftware vorgesehen, die eine Bedienung des Futterautomaten mit einem mobilen Computer, insbesondere mit einem Smartphone oder Tabletcomputer ermöglicht.

Sämtliche in der Beschreibung genannte und/oder der Zeichnung dargestellte Merkmale können einzeln für sich oder in jeder beliebigen Kombination bei Ausführungen der Erfindung verwirklicht sein. Ausführungen der Erfindung, die nicht alle, sondern nur einen Teil der Merkmale eines Anspruchs, auch des unabhängigen Anspruchs, aufweisen, sind möglich.

Die Erfindung wird nachfolgend anhand eines in der Zeichnung dargestellten Ausführungsbeispiels näher erläutert. Es zeigen:

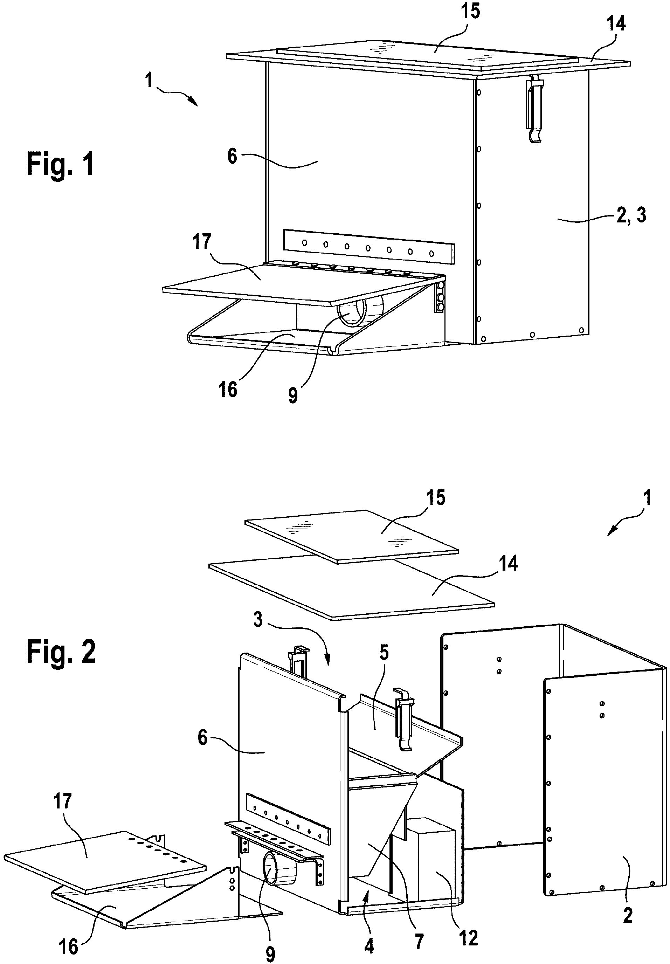

Figur 1 einen erfindungsgemäßen Futterautomaten in perspektivischer Darstellung; und

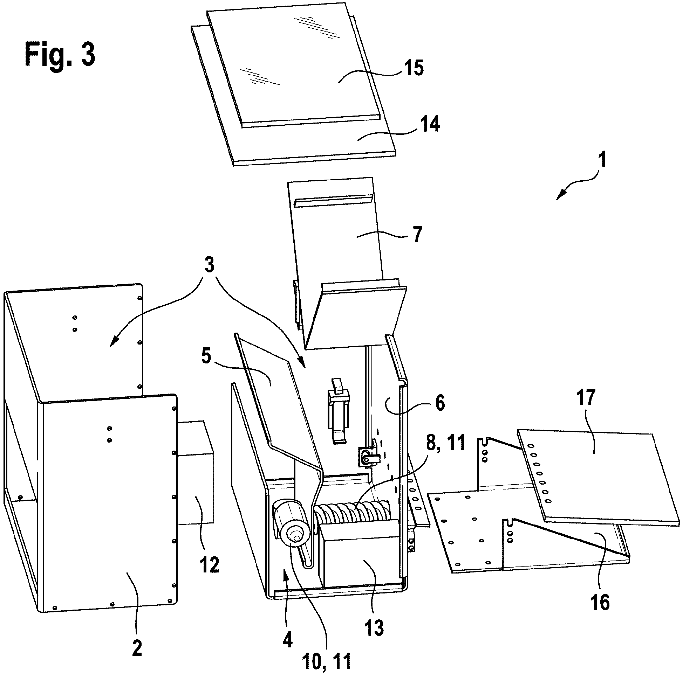

Figuren 2 und 3 den Futterautomaten aus Figur 1 in Explosionsdarstellung mit verschiedenen Blickrichtungen.

Der in der Zeichnung dargestellte, erfindungsgemäße Futterautomat 1 ist zum Kirren vorgesehen, das heißt zu einem automatischen Füttern von Wild mit einem schüttfähigen, insbesondere körnigen Futter wie Mais, das hier als "Kirrgut" bezeichnet wird.

Der Futterautomat 1 weist ein quaderförmiges Gehäuse 2 auf, das aus Blechen zusammengesetzt ist. Eine schräge Innenwand 5 teilt das Gehäuse 2 in einen Vorratsbehälter 4 für das Kirrgut und einen Raum 4 für Einbauten. Zwischen einer Vorderwand 6, die eine Außenwand des Gehäuses 2 ist, und der Innenwand 5 ist ein V-förmiges Leitblech 7 angeordnet, das im Bereich seines Scheitels eine Rinne bildet, in der eine Förderschnecke 8 angeordnet ist. Die Rinne und die Förderschnecke 8 führen zu einem kurzen Rohr in einem Loch unten in einer Mitte der Vorderwand 6, das einen Auslass 9 des Vorratsbehälters 3 und des Futterautomaten 1 bildet, durch den Kirrgut aus dem Vorratsbehälter 3 mit der Förderschnecke 8 förderbar ist.

In dem Raum 4 für Einbauten ist ein Elektromotor 10 mit einem Winkelgetriebe zum Antrieb der Förderschnecke 8 untergebracht. Der Elektromotor 10 mit dem Winkelgetriebe und die Förderschnecke 8 bilden eine Dosiereinrichtung 11, mit der das Kirrgut aus dem Vorratsbehälter 3 dosiert durch den Auslass 9 abgegeben werden kann. Außerdem sind ein Akkumulator als elektrischer Energiespeicher 12 und ein elektronisches Steuergerät 13 mit einer programmierbaren Steuerung für die Dosiereinrichtung 11 in dem Raum 4 für Einbauten untergebracht. Das Steuergerät 13 weist auch eine Funksende- und -empfangseinheit (nachfolgend kurz: "Funkeinheit") für eine Fernbedienung für den Futterautomaten 1 auf.

Auf dem Gehäuse 2 ist ein Deckel 14 angeordnet, der zum Befüllen des Vorratsbehälter 3 abnehmbar ist. Auf dem Deckel 14 weist der Futterautomat 1 eine Solarzelle 15 zum Laden des elektrischen Energiespeichers 12 auf.

Vor der Vorderwand 4 und unter dem Auslass 9 weist der Futterautomat 1 ein Blech mit dreiecksförmigen Seitenwänden als Kirrgutauffang 16 auf, der mit einer nach oben schwenkbaren Klappe 17 abgedeckt ist. Zusätzlich zu ihrem Eigengewicht kann die Klappe 17 mit Gewichten belastbar und/oder federbeaufschlagbar sein (nicht dargestellt), so dass beispielsweise nur Wildschweine oder auch Rehe die Klappe 17 anheben können und beispielsweise Vögel und Kleinwild nicht in der Lage sind, die Klappe 17 anzuheben. Dadurch sind nur Wildschweine und ggf. auch Rehe in der Lage, an Kirrgut zu gelangen, das sich unter der Klappe 17 auf dem Kirrgutauffang 16 befindet, wogegen kleinere und schwächere Tiere dazu nicht in der Lage sind.

Außerdem weist der Futterautomat 1 einen Füllstandsensor, mit dem ein einstellbarer Füllstand des Vorratsbehälter 3, und einen Klappenöffnungssensor, mit dem ein Anheben der Klappe 10 feststellbar ist, auf (nicht dargestellt).

Andere Bauarten des Futterautomaten auch mit einem nicht metallischen Gehäuse sind ebenfalls möglich.

Mit der programmierbaren Steuerung sind Futtermengen und Fütterzeiten einstellbar. Futtermengen sind Mengen an Kirrgut, die die Dosiereinrichtung 11 aus dem Vorratsbehälter 3 durch den Auslass 9 auf den Kirrgutauffang 16 unter der Klappe 17 fördert. Über seine Funkeinheit meldet das Steuergerät 13 ein Absinken des Kirrguts im Vorratsbehälter 3 unter die einstellbare Menge. Außerdem meldet das Steuergerät 13 über seine Funkeinheit, wie oft und wann die Klappe 17 angehoben worden ist beziehungsweise es lässt sich abfragen, wann und wie oft die Klappe 17 angehoben worden ist und der Füllstand des Vorratsbehälters 3. Die Funkeinheit des Steuergeräts 13 bildet eine beziehungsweise einen Teil einer Fernbedienung, Fernmelder und/oder Fernabfrage. Eine Fernbedienung und Fernabfrage ist mittels eines Smartphones oder eines Tabletcomputers mithilfe einer App, also einer Anwendungssoftware, vorgesehen.

## Patentansprüche

1. Futterautomat mit einem Vorratsbehälter (3) für Kirrgut und mit einer automatischen, programmierbaren Dosiereinrichtung (11), die das Kirrgut dosiert abgibt.

2. Futterautomat nach Anspruch 1, **dadurch gekennzeichnet, dass** die Dosiereinrichtung (11) einen elektrischen Antrieb (10), einen aufladbaren Stromspeicher (12) und eine Solarzelle (15) zum Aufladen des Stromspeichers (12) aufweist.

3. Futterautomat nach Anspruch 2, **dadurch gekennzeichnet, dass** die Dosiereinrichtung (11) einen Schneckenförderer mit einer Förderschnecke (8) aufweist.

4. Futterautomat nach einem oder mehreren der Ansprüche 1 bis 3, **dadurch gekennzeichnet, dass** der Futterautomat (1) einen Füllstandssensor für den Vorratsbehälter (3) aufweist.

5. Futterautomat nach einem oder mehreren der vorhergehenden Ansprüche, **dadurch gekennzeichnet, dass** der Futterautomat (1) eine anhebbare Klappe (17) oder einen Schieber aufweist, die/der eine Futterstelle an einem Auslass (9) des Futterautomaten (1) abdeckt.

6. Futterautomat nach Anspruch **5,dadurch gekennzeichnet, dass** der Futterautomat (1) einen Kirrgutauffang (16) aufweist, in den aus dem Auslass (9) austretendes Kirrgut gelangt und der von der Klappe (17) oder dem Schieber abgedeckt wird.

7. Futterautomat nach Anspruch 5 oder 6, **dadurch gekennzeichnet, dass** der Futterautomat (1) einen Klappenöffnungssensor aufweist.

8. Futterautomat nach einem oder mehreren der vorhergehenden Ansprüche, **dadurch gekennzeichnet, dass** der Futterautomat (1) eine Fernbedienung und/oder einen Fernmelder und/oder eine Fernabfrage aufweist.
